(19) Europäisches Patentamt
European Patent Office
Office européen des brevets

(11) **EP 3 006 988 B1**

(12) **EUROPEAN PATENT SPECIFICATION**

(45) Date of publication and mention
of the grant of the patent:
**30.11.2022 Bulletin 2022/48**

(21) Application number: **15188399.8**

(22) Date of filing: **05.10.2015**

(51) International Patent Classification (IPC):
***G02B 27/01*** *(2006.01)*  ***G02B 26/10*** *(2006.01)*

(52) Cooperative Patent Classification (CPC):
**G02B 27/0101;** G02B 26/101; G02B 2027/011;
G02B 2027/0145

(54) **IMAGE DISPLAY APPARATUS**

BILDANZEIGEVORRICHTUNG

APPAREIL D'AFFICHAGE D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2014 JP 2014206715**
**12.11.2014 JP 2014230041**

(43) Date of publication of application:
**13.04.2016 Bulletin 2016/15**

(73) Proprietor: **Ricoh Company, Ltd.**
**Tokyo 143-8555 (JP)**

(72) Inventors:
• **NAKAMURA, Naoki**
**Ohta-ku, Tokyo 143-8555 (JP)**
• **MIYATAKE, Naoki**
**Ohta-ku, Tokyo 143-8555 (JP)**
• **TATSUNO, Hibiki**
**Ohta-ku, Tokyo 143-8555 (JP)**
• **ICHII, Daisuke**
**Ohta-ku, Tokyo 143-8555 (JP)**
• **OHNO, Takehide**
**Ohta-ku, Tokyo 143-8555 (JP)**

(74) Representative: **J A Kemp LLP**
**80 Turnmill Street**
**London EC1M 5QU (GB)**

(56) References cited:
EP-A1- 2 945 001  DE-A1-102012 218 360
FR-A3- 2 984 533  US-A1- 2009 237 803
US-A1- 2013 094 092  US-B1- 6 750 832

**Description**

1. Field of the Invention

The present invention relates to an image display apparatus.

2. Description of the Related Art

There is known a head-up display as an image display apparatus that is provided in a mobile body such as an automobile, an aircraft, and a ship and displays information on operation of the mobile body in the manner that a user can visually recognize the information easily. The head-up display projects image light for displaying information on an optical element, what is called a combiner, and images the image light on retinas of the user, so that the user can visually recognizes the image light as a virtual image. As the combiner, a front windshield of a mobile body may be also used, or a separate transparent reflection member may be used.

The head-up display is normally disposed on a forward position to the user (operator) of the mobile body. For example, when the mobile body is an automobile, the head-up display is stored in a dashboard. Therefore, the head-up display is preferable to be small-sized. Meanwhile, the head-up display preferably has a configuration allowing a large virtual image in terms of improving the visibility of information.

An optical element projecting a virtual image on the combiner may be increased in size in order to enlarge the virtual image by the head-up display. However, the increase in size of the optical member is not convenient to downsize the head-up display. In this way, the downsizing of the head-up display and the enlargement of a virtual image by the head-up display cause a contradictory problem.

Then, in order to downsize the head-up display, there is known a head-up display aiming at reducing in size a part of an optical element while improving the visibility of a virtual image (refer to Japanese Laid-open Patent Publication No. 2004-101829, for example).

The head-up display of Patent Application Laid-open No. 2004-101829 is downsized by changing a partial shape of a concave mirror and is configured to correct distortion of a virtual image. The shape of a concave mirror greatly influences distortion correction of a virtual image. Therefore, the change of the shape of a concave mirror, even if the change is partial, is not preferable in terms of distortion correction of a virtual image. When the concave mirror is made small in size or the shape thereof is changed partially to downsize the head-up display, the distortion correction of a virtual image may not be performed sufficiently.

US-6,750,832 discloses an information display system having an output display for presenting information. Optical means are provided that deflect an illumination beam path into the field of view of the observer. Further, a subdividable output display is created that makes it possible to partly obtain information in a vehicle via a head-up display and partly via a traditional or back-projection display.

DE 10/2012,218360 discloses a head-up display for a vehicle for displaying image information in the viewing direction of a vehicle occupant. It is essential that optical elements are formed, an image information-bearing beam volume to form with an effective area in a direction intermediate focus.

FR-2,984,533 discloses a head-up display including a projection unit, and converging elements for transforming the images, so as to create virtual images for display in a spatial area through a partially reflective medium.

EP 2,945,533 discloses a head-up display apparatus having an image-forming unit comprising a light source, a scanning optical-system and a mirror reflecting light to a curved windshield. Shearing deformation is performed on an intermediate image, formed in the image-forming unit and to be scanned, in order to prevent from the influence of the shape of the windshield.

US 2009/0237803 A1 discloses a head-up display device.

In view of the above-described aspect, there is a need to provide an image display apparatus capable of sufficiently correcting distortion of a virtual image and downsizing the apparatus.

SUMMARY OF THE INVENTION

It is an object of the present invention to at least partially solve the problems in the conventional technology.

The scope of the invention is defined by the claims.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a configuration diagram illustrating an example of a head-up display that is an embodiment of an image display apparatus according to the invention;

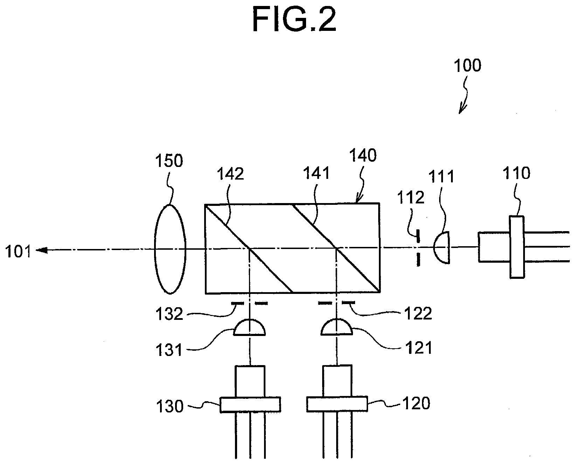

FIG. 2 is a configuration diagram illustrating an example of a light source of the head-up display;
FIG. 3 is a configuration diagram illustrating an example of a scanning optical system of the head-up display;
FIGS. 4A and 4B are diagrams illustrating arrangement examples of a part of a virtual image optical system of the head-up display, in which FIG. 4A is a conventional arrangement example and FIG. 4B is an arrangement example of the invention;
FIGS. 5A and 5B are graphs illustrating an optical performance simulation results of the head-up display, in which FIG. 5A is a distortion characteristics diagram in the conventional arrangement example and FIG. 5B is a distortion characteristics diagram in the arrangement example of the invention;
FIGS. 6A and 6B are graphs illustrating another optical performance simulation results of the head-up display, in which FIG. 6A is a modulation transfer function (MTF) performance diagram in the conventional arrangement example and FIG. 6B is a MTF performance diagram in the arrangement example of the invention; and
FIG. 7 is a partially enlarged plan view of the head-up display when viewed from a -Y direction.

DETAILED DESCRIPTION OF THE PREFERRED EMBODIMENTS

Head-up Display

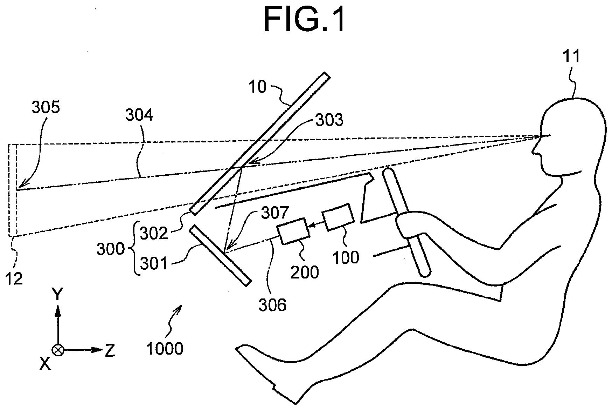

The following will describe a head-up display (hereinafter, referred to as an "HUD") that is an embodiment of the image display apparatus of the invention with reference to the enclosed drawings. As illustrated in FIG. 1, an HUD 1000 includes a light source 100, a scanning optical system 200, and a virtual image optical system 300.

The HUD 1000 is provided in a mobile body such as an automobile, an aircraft, and a ship that are objects, and displays information on operation of the mobile body as a virtual image in the manner that a user 11 can visually recognize the information easily. The embodiment exemplifies the case in which the HUD 1000 is provided in an automobile. The basic operation of the HUD 1000 is as follows. First, with light emitted from the light source 100, the scanning optical system 200 forms image light for displaying information related to operation of the automobile. The virtual image optical system 300 enlarges and projects the image light, so that a user 11 can visually recognize an enlarged virtual image 12.

In the virtual image optical system 300 of the embodiment, a front windshield 10 (what is called a front glass) of the mobile body (automobile) is used as a combiner 302. Note that, instead of the front windshield 10, a separate transparent reflection member may be used as the combiner 302. This alternative is however not covered by the present invention and the appended claims. In the following explanation, any of the "combiner 302" or the "front windshield 10" is used to indicate a target on which the virtual image optical system 300 projects image light.

When the mobile body is an automobile, the front windshield 10 is inclined in a vertical direction of a field of view of the user 11, and the upper side of the front windshield 10 is close to the user 11, and the lower side of the front windshield 10 is away from the user 11. Moreover, the front windshield 10 is curved in a right-left direction of a field of view of the user 11. In the case of an automobile with a right-side steering wheel, the front windshield 10 is curved in the right-left direction such that the distance to the user 11 is closer toward the right side from the left side.

When image light is projected on the combiner 302, the user 11 of the automobile can view a virtual image at a position away from a physical position of the combiner 302 (on a side away from the user 11). The information related to operation of the automobile that is displayed as the virtual image contains a speed, a traveling distance of the automobile, navigation information such as destination display, and other items.

A device using the front windshield 10 as the combiner 302 on which image light is projected is referred to as a front glass projection type. Another device equipped with a transparent reflection member separate from the front windshield 10 is referred to as a combiner projection type. When the HUD 1000 is provided in an automobile, the front glass projection type is more preferable in terms of, for example, vehicle interior design or discomfort of the combiner 302, which is a separate member from the front windshield 10, getting in a field of view.

In the case of the front glass projection type, in general, an optical system for generating an intermediate image (image light) is embedded in a dashboard of an automobile. Note that a viewpoint of the user 11 simply indicates a viewpoint position as a reference (reference eye point). The range of a viewpoint of the user 11 is equal to or smaller than an eye range of drivers for automobiles (JIS D0021).

Here, a three-dimensional orthogonal coordinate system used for explanation of the embodiment will be described with reference to FIG. 1. As illustrated in FIG. 1, the right-left direction of a field of view of the user 11 is an X-axis direction. In this case, a right direction of the user 11 (deep direction in FIG. 1) is a +X direction, and a left direction of the user 11 is a -X direction (front direction in FIG. 1). The vertical direction of a field of view of the user 11 is a Y-axis direction. An upward direction of the user 11 is a +Y direction, and a downward direction of the user 11 is a -Y direction. In addition, a deep direction of a field of view of the user 11, that is, a traveling direction of the automobile is a Z-axis direction. A forward direction is a -Z direction, and a backward direction is a +Z direction. In summary and in other words, a width direction of the automobile is the X-axis direction, a height direction of the automobile is the Y-axis direction, and the longitudinal direction of the automobile is the Z-axis direction.

The entire configuration of the HUD 1000 will be described. As illustrated in FIG. 1, the center of the incident region of the image light to be incident on the combiner 302 from the magnifying concave mirror 301 included in the virtual image optical system 300 is defined as an incident region center 303. As illustrated in FIG. 1, a tangent plane at the incident region center 303 is inclined with respect to a first virtual axis 304 connecting a viewpoint of the user 11 and the center of the enlarged virtual image 12 (virtual image center 305) when viewed from the X-axis direction. The tangent plane is inclined with respect to the first virtual axis 304 when viewed from the Y-axis direction. Note that the first virtual axis 304 is an axis passing through the incident region center 303.

Moreover, the center of the reflection surface of the magnifying concave mirror 301 is defined as a reflection surface center 307. The reflection surface center 307 is the center of the effective reflection region of the magnifying concave mirror 301, and the center of the luminous flux incident on the virtual image optical system 300 from the scanning optical system 200.

Assuming a second virtual axis 306 connecting the center of an intermediate image formed by the scanning optical system 200 (center of a scanned surface described later) and the reflection surface center 307, the second virtual axis 306 is inclined with respect to the first virtual axis 304 when viewed from the X-axis direction, as illustrated in FIG. 1. Moreover, the second virtual axis 306 is inclined with respect to the first virtual axis 304 when viewed from the Y-axis direction. Note that the "center of the scanned surface" indicates the center of the effective scanning area of a scanned surface element 203 described later.

In the height direction (Y direction) of the automobile, the center of the intermediate image (center of the scanned surface element 203) is positioned above the reflection surface center 307 and below the incident region center 303. In the longitudinal direction (Z-axis direction) of the automobile, the reflection surface center 307 is positioned on a forward position to the incident region center 303.

Light Source

Each component of the HUD 1000 will be described below. The light source 100 is a light source device, and emits an image display beam 101 used for generating the enlarged virtual image 12 that is a color image. The image display beam 101 is a light beam obtained by synthesizing beams of three colors of red (hereinafter, referred to as "R"), green (hereinafter, referred to as "G"), and blue (hereinafter, referred to as "B").

The light source 100 includes a first laser element 110, a second laser element 120, and a third laser element 130, which are semiconductor laser elements emitting laser light of each color. The light source 100 includes a first coupling lens 111, a second coupling lens 121, and a third coupling lens 131, which suppress divergence of laser light emitted from each laser element. The light source 100 also includes a first aperture 112, a second aperture 122, and a third aperture 132, which restrict a luminous flux diameter of each laser light from each coupling lens, thereby shaping each luminous flux. In addition, the light source 100 includes a beam synthesizing prism 140 that synthesizes the shaped laser luminous flux of each color and emits the image display beam 101, and a lens 150.

The first laser element 110 is a laser element that emits laser light for forming a red image. The second laser element 120 is a laser element that emits laser light for forming a green image. The third laser element 130 is a laser element that emits laser light for forming a blue image. A laser diode (LD) referred to as an edge emitting laser may be used for each laser element. Instead of the edge emitting laser, a vertical cavity surface emitting laser (VCSEL) may be used.

The beam synthesizing prism 140 includes a first dichroic film 141 letting red laser light pass through and reflecting green laser light, and a second dichroic film 142 letting red and green laser light pass through and reflecting blue laser light.

Red laser light emitted from the first laser element 110 is incident on the beam synthesizing prism 140 through the first coupling lens 111 and the first aperture 112. The red laser light having been incident on the beam synthesizing prism 140 passes through the first dichroic film 141 and advances straight.

Green laser light emitted from the second laser element 120 is incident on the beam synthesizing prism 140 through the second coupling lens 121 and the second aperture 122. The green laser light having been incident on the beam synthesizing prism 140 is reflected on the first dichroic film 141 and guided into the same direction as the red laser light (direction toward the second dichroic film 142).

Blue laser light emitted from the third laser element 130 is incident on the beam synthesizing prism 140 through the third coupling lens 131 and the third aperture 132. The blue laser light having been incident on the beam synthesizing prism 140 is reflected on the second dichroic film 142 into the same direction as the red laser light and the green laser light.

As described above, the red laser light and the green laser light passing through the second dichroic film 142 and the blue laser light reflected on the second dichroic film 142 are emitted from the beam synthesizing prism 140. Therefore, the laser light emitted from the beam synthesizing prism 140 is a single laser luminous flux obtained by synthesizing red laser light, green laser light, and blue laser light. The lens 150 converts the synthesized laser light into a "parallel beam" with a certain luminous flux diameter. The "parallel beam" is the image display beam 101.

The intensity of the laser luminous flux of each color of R, G, and B forming the image display beam 101 is modulated in accordance with image signals of a "two-dimensional color image" to be displayed or image data indicating the image information. The intensity of the laser luminous flux may be modulated by a system of directly modulating a semiconductor laser of each color (direct modulation system) or a system of modulating a laser luminous flux emitted from a semiconductor laser of each color (external modulation system).

That is, each semiconductor laser element emits laser light of each color the emission intensity of which is modulated with an image signal of each color component of R, G, and B, by a drive unit driving each semiconductor laser element.

Note that as a light source, a light-emitting diode (LED) element may be used instead of the above-described semiconductor laser element.

Scanning Optical System

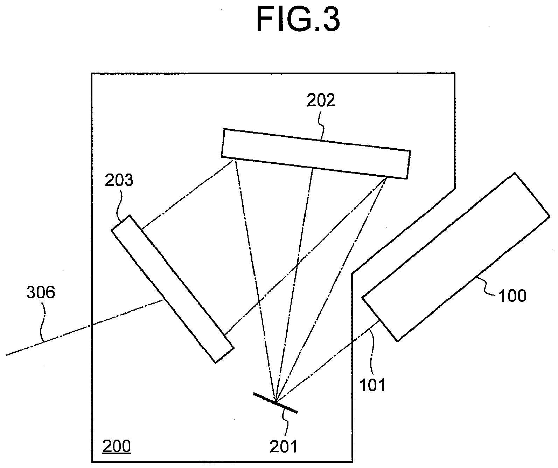

Next, the scanning optical system 200 will be described in detail. As illustrated in FIG. 3, the scanning optical system 200 includes a two-dimensional deflection element 201, a mirror 202, and the scanned surface element 203. The two-dimensional deflection element 201 is an image forming element that two-dimensionally deflects the image display beam 101 emitted from the light source 100. The two-dimensional deflection element 201 is an assembly of micromirrors configured to rock using two axes orthogonal to each other, and is one of micro electro mechanical systems (MEMS) formed as a rocking micromirror element in a semiconductor process and the like. Note that the two-dimensional deflection element 201 is not limited to the above-described example, and two micromirrors may be disposed for one axis so that such two micromirrors rock in directions orthogonal to each other around the axis.

Note that the two-dimensional deflection element 201 is not limited to the rocking micromirror element (digital micromirror device (DMD) by Texas Instruments Incorporated) as long as it can form an "intermediate image" described later. For example, there may be used, as the two-dimensional deflection element 201, a transparent liquid crystal element including a transparent liquid crystal panel, a reflective liquid crystal element that is a liquid crystal device including a reflective liquid crystal panel, or other devices.

The image display beam 101 is two-dimensionally deflected by the two-dimensional deflection element 201 and is then incident on the mirror 202. The mirror 202 is a concave mirror. The image display beam 101 is reflected on the mirror 202 toward the scanned surface element 203. The mirror 202 is designed to correct a curve of a scanning line (scanning trajectory), the curve being generated on the scanned surface element 203. The image display beam 101 reflected on the mirror 202 moves in parallel, with deflection by the two-dimensional deflection element 201, and is incident on the scanned surface element 203. The scanned surface element 203 is two-dimensionally scanned with the image display beam 101.

When an optical element of a transparent liquid crystal element is used for the two-dimensional deflection element 201, the image display beam 101 deflected two-dimensionally by the transparent liquid crystal element is incident on the scanned surface element 203 without passing through the mirror 202.

The scanned surface element 203 is two-dimensionally scanned with the image display beam 101 in a main-scanning direction and a sub-scanning direction. To be more specific, there is performed raster scan in which the main-scanning direction is scanned at a high speed and the sub-scanning direction is scanned at a low speed, for example. By such two-dimensional scanning, an intermediate image is formed on the scanned surface element 203. The intermediate image formed here is a "color two-dimensional image". In the explanation of the embodiment, the intermediate image is assumed to be a color image. However, a monochrome image may be formed on the scanned surface element 203.

Note that the scanned surface element 203 displays, at each moment, "only a pixel irradiated with the image display beam 101 at the moment". Thus, the above-described "color two-dimensional image" is formed as "a set of pixels displayed at each moment" by two-dimensional scanning with the image display beam 101.

The scanned surface element 203 is formed using fine convex lenses. In the "fine convex lens structure", the image display beam 101 incident on the scanned surface element 203 is diffused and emitted toward the virtual image optical system 300. A wide area in the vicinity of eyes of the user 11 is irradiated with the image light diffused by the scanned surface element 203, through the combiner 302. Thus, even slightly moving the head (moving the viewpoint), the user 11 can visually recognize the enlarged virtual image 12 securely.

Note that the scanned surface element 203 is not limited to the fine convex lens structure (microlens array), and a diffuser, a transparent screen, a reflection screen, and the like may be used. In the explanation of the embodiment, the scanned surface element 203 that is a micro-lens array is assumed to be a device on which a plurality of microlenses are arranged two-dimensionally. Alternatively, the scanned surface element 203 may be formed by a plurality of microlenses arranged one-dimensionally or three-dimensionally.

Virtual Image Optical System

The following will describe the detailed configuration of the virtual image optical system 300. As illustrated in FIG. 1, the virtual image optical system 300 includes the magnifying concave mirror 301 and the combiner 302. The combiner 302 is as described above. The "color two-dimensional image" formed on the scanned surface element 203 is incident on the magnifying concave mirror 301 as pixel light that is light in pixel units of image information (light corresponding to each pixel). The magnifying concave mirror 301 reflects the incident image light toward the combiner 302.

On the front windshield 10 that is the combiner 302, a horizontal line in the projected intermediate image is convex upward or downward. The magnifying concave mirror 301 is designed and disposed to correct such optical distortion elements.

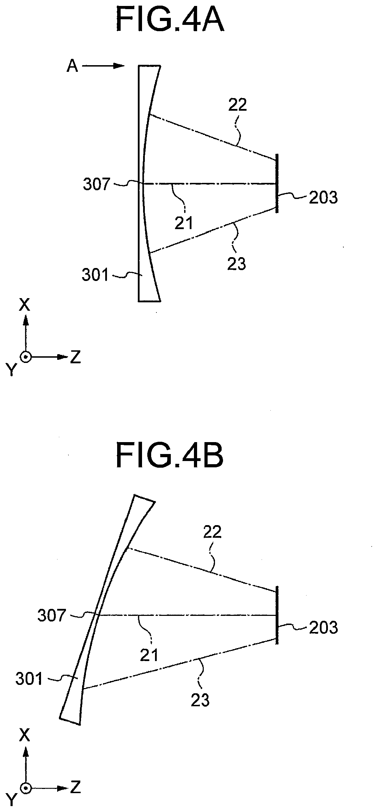

The following will describe the detailed configuration of the virtual image optical system 300. To facilitate the explanation, there are assumed light from the center of the scanned surface element 203 (first image light 21) and light from the ends of the scanned surface element 203 (second image light 22, third image light 23) when the HUD 1000 is viewed from the +Y direction to the -Y direction, as illustrated in FIGS. 4A and 4B.

FIG. 4A is a conventional optical arrangement example, and is an optical arrangement diagram for clearly explaining the characteristics of the magnifying concave mirror 301 of the embodiment. FIG. 4B is an optical arrangement diagram of the magnifying concave mirror 301 with respect to the scanned surface element 203 of the embodiment.

In FIGS. 4A and 4B, the first image light 21 from the center of the scanned surface element 203 is incident on a virtual point (reflection surface center 307) on the reflection surface of the magnifying concave mirror 301. As illustrated in FIG. 4A, when the magnifying concave mirror 301 is disposed without being rotated relative to the scanned surface element 203 on an X-Z plane, the lengths of the second image light 22 and the third image light 23 are equal. In the magnifying concave mirror 301 of the embodiment, as illustrated in FIG. 4B, the magnifying concave mirror 301 is rotated relative to the scanned surface element 203 on the X-Z plane, and the lengths of the second image light 22 and the third image light 23 are made different from each other so as to downsize the HUD 1000. In this case, the magnifying concave mirror 301 is rotated about a rotation axis parallel to the Y-axis direction positioned at an A point in FIG. 4A.

Here, the lateral direction (X direction) of the enlarged virtual image 12 when viewed from the user 11, the lateral direction of the magnifying concave mirror 301, and the lateral direction of the scanned surface element 203 are the same directions. Similarly, the vertical direction (Y direction) of the enlarged virtual image 12 when viewed from the user 11, the vertical direction of the magnifying concave mirror 301, and the vertical direction of the scanned surface element 203 are the same directions.

Therefore, the magnifying concave mirror 301 is disposed such that a distance between an end in the lateral direction of the magnifying concave mirror 301 and an end in the lateral direction of the scanned surface element 203 facing the end of the magnifying concave mirror 301 is different from a distance between the other end of the magnifying concave mirror 301 and the other end of the scanned surface element 203. In other words, the magnifying concave mirror 301 is disposed in such a manner that it is rotated about an axis as the rotation center in parallel to the Y-axis direction.

Moreover, the lateral direction (X direction) of the intermediate image, the lateral direction of the enlarged virtual image 12, and the lateral direction of the magnifying concave mirror 301 are the same directions. The same applies to the vertical direction. Therefore, the magnifying concave mirror 301 is disposed such that the end facing one end in the lateral direction of the intermediate image is close to an end in the lateral direction of the scanned surface element 203, and the end facing the other end of the intermediate image is away from the other end in the lateral direction of the scanned surface element 203.

Moreover, a normal line in the center of the intermediate image formation surface of the scanned surface element 203 crosses a normal line in the reflection surface center 307 of the magnifying concave mirror 301 on the X-Z plane.

In the above-described arrangement state of the magnifying concave mirror 301, that is, the arrangement state in which the magnifying concave mirror 301 is rotated relative to the scanned surface element 203 on the X-Z plane and the length of the second image light 22 is different from the length of the third image light 23, the distortion of the enlarged virtual image 12 is increased. That is, the optical performance of the HUD 1000 is deteriorated. Thus, in the magnifying concave mirror 301 of the embodiment, the reflection surface has a non-rotationally symmetrical shape. That is, the reflection surface of the magnifying concave mirror 301 is formed by a free curved surface. Thus, the aberration of the enlarged virtual image 12 can be corrected and the optical performance is improved.

Example of Virtual Image Optical System

The following will describe an example of the virtual image optical system 300 and the magnifying concave mirror 301. Table 1 represents the specifications of the virtual image optical system 300 of the example.

Table 1

| Position of virtual image (distance between observer 11 and enlarged virtual image 12) | 2 m |
|---|---|
| Angle of view (angle at which observer 11 views enlarged virtual image 12) | 7.2° × 2.8° |
| Size of image forming unit (scanned surface element 203) | 38 mm × 16 mm |

As described above, the magnifying concave mirror 301 is a mirror having a non-rotationally symmetrical shape with a free curved reflection surface. The shape of the magnifying concave mirror 301 is defined by the following polynomial (Expression 1). The shape of the magnifying concave mirror 301 can be calculated by substituting a numerical value represented in Table 2 for each variable of Expression 1.

$$z = \frac{cr^2}{1+\sqrt{1-(1+k)c^2r^2}} + \sum_{j=2}^{66} C_j x^m y^n \tag{1}$$

where

$$j = \frac{(m+n)^2 + m + 3n}{2} + 1$$

z: sag quantity parallel to z-axis
c: curvature of apex
k: conic efficient
$C_j$: efficient of monomial $x^m y^n$

Table 2

| c | | -4.28E-03 |
|---|---|---|
| k | | 0 |
| C4 | $x^2$ | 3.70E-03 |
| C5 | Xy | -7.35E-05 |
| C6 | $y^2$ | 3.48E-03 |
| C7 | $x^3$ | 1.75E-06 |
| C8 | $x^2 y$ | 1.64E-06 |
| C9 | $xy^2$ | 2.42E-06 |
| C10 | $y^3$ | 1.70E-06 |
| C11 | $x^4$ | 1.51E-08 |
| C12 | $x^3 y$ | 7.91E-09 |
| C13 | $x^2 y^2$ | 2.74E-08 |
| C14 | $xy^3$ | 1.31E-08 |
| C15 | $y^4$ | 1.26E-08 |

The following will describe the position and the posture (angle) of each optical element of the HUD 1000 of the example. Table 3 represents the position and the posture (angle) of each optical element in the example when the image center of the enlarged virtual image 12 is set to the origin of coordinates of an XYZ orthogonal coordinate system.

Table 3

| | position [mm] | | | angle [°] | | |
|---|---|---|---|---|---|---|
| | X | Y | Z | α | β | γ |
| Enlarged virtual image 12 | 0.00 | 0.00 | 0.00 | 0.00 | 0.00 | 0.00 |
| View-point of observer 11 | 0.00 | 177.42 | -2000.00 | 0.00 | 0.00 | 0.00 |
| Combiner 302 | 0.00 | 85.89 | -1129.55 | 58.00 | 8.08 | 0.00 |
| Magnifying concave mirror 301 | 34.86 | -65.89 | -1053.63 | 139.67 | -14.66 | -26.87 |
| Scanned surface element 203 | 107.90 | -30.63 | -1153.27 | 155.87 | -37.48 | -9.84 |

As described above, the virtual image optical system of the example satisfies the following conditions. That is, when the lateral length of the scanned surface element 203 is W, the lateral length of the enlarged virtual image 12 is W', the distance between the combiner 302 and the enlarged virtual image 12 is S', and the distance between the scanned surface element 203 and the magnifying concave mirror 301 is S, the following Expression 2 is satisfied.

$$S < WS'/W' \qquad\qquad (2)$$

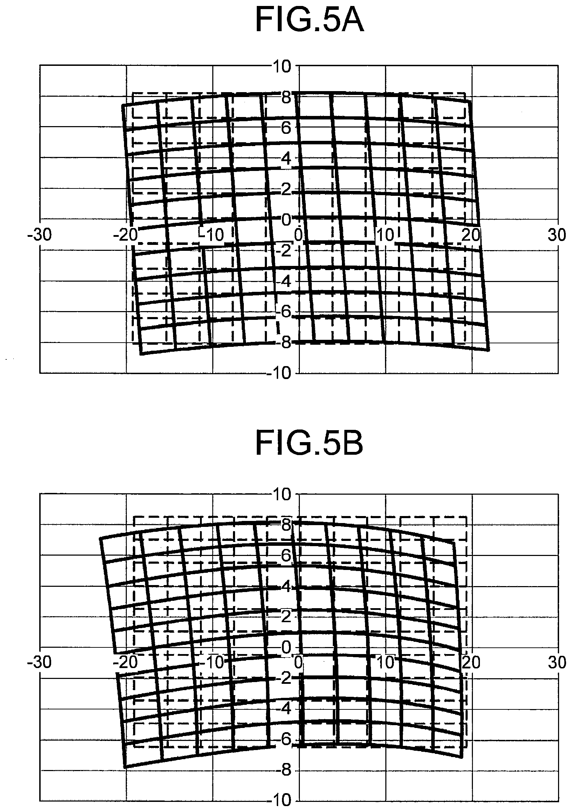

Next, the characteristics of the HUD 1000 will be described with reference to a result of simulation using a computer regarding the optical performance of the example. The simulation result shown in FIGS. 5A and 5B represents the distortion characteristics of the scanned surface element 203 that are obtained by backward ray tracing from the enlarged virtual image 12. Note that FIG. 5A is a simulation result based on the arrangement state in which the magnifying concave mirror 301 is not rotated relative to the scanned surface element 203, as illustrated in FIG. 4A. FIG. 5B is a simulation result based on the arrangement state in which the magnifying concave mirror 301 is rotated relative to the scanned surface element 203, as illustrated in FIG. 4B. That is, the distortion characteristics of the embodiment are represented in the graph of FIG. 5B.

The grids indicated by dotted lines shown in FIGS. 5A and 5B illustrate examples of an ideal state having no distortion. The grids indicated by solid lines shown in FIGS. 5A and 5B illustrate examples of a simulation result of distortion characteristics of each case. As is clear from the comparison between FIG. 5A and FIG. 5B, when the magnifying concave mirror 301 is rotated relative to the scanned surface element 203, the distortion characteristics are deteriorated particularly at the end parts. However, in the comparison between the areas at and around the center parts in the longitudinal direction, a difference in the characteristics falls within a range not causing a problem for practical use. This is because the magnifying concave mirror 301 has a non-rotationally symmetrical shape and the reflection surface thereof is formed by a free curved surface. That is, in the HUD 1000, even when the magnifying concave mirror 301 is disposed in such a manner that it is rotated relative to the scanned surface element 203 on the X-Z plane, the degree of deterioration falls within a range not causing a problem.

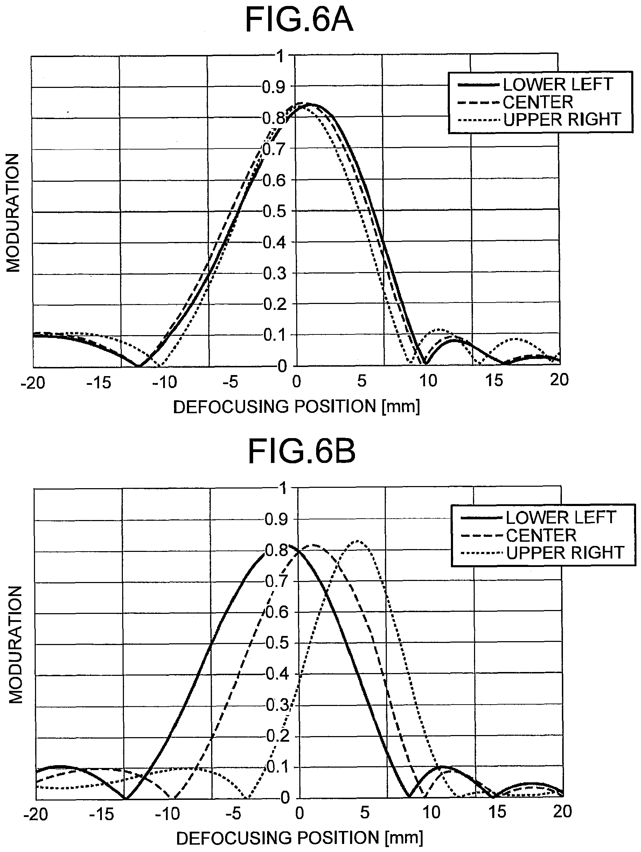

Next, another optical performance of the example will be described with reference to a result of simulation using a computer, similarly to the above. The simulation result in FIG. 6 represents the MTF performance of the scanned surface element 203 that is obtained by backward ray tracing from the enlarged virtual image 12. The MTF performance indicates resolution in a vertical direction and a lateral direction regarding each of the angles of the scanned surface element 203, the intermediate points of the angles, and the center point of the scanned surface element 203. Therefore, 18 lines are originally represented in a graph to indicate the MTF performance. However, when all lines are represented in the graph, the graph becomes complicated and unclear, which makes it difficult to understand the characteristics of the embodiment. Thus, FIGS. 6A and 6B illustrate only the MTF performance in the vertical direction at three points positioned on a diagonal line in the scanned surface element 203.

A solid lines shown in FIGS. 6A and 6B represent the MTF performance on the image light from the "lower left" on the scanned surface element 203 when the scanned surface element 203 is viewed from the magnifying concave mirror 301. A long dashed line represents the MTF performance on the image light from the "center" on the scanned surface element 203 when the scanned surface element 203 is viewed from the magnifying concave mirror 301. A short dashed line represents the MTF performance on the image light from the "upper right" on the scanned surface element 203 when the scanned surface element 203 is viewed from the magnifying concave mirror 301.

The following will describe the relation between each image light and the magnifying concave mirror 301 with the scanned surface element 203. FIG. 6A illustrates the MTF performance when the magnifying concave mirror 301 is not rotated relative to the scanned surface element 203 as illustrated in FIG. 4A. FIG. 6B illustrates the MTF performance when the magnifying concave mirror 301 is rotated relative to the scanned surface element 203 as illustrated in FIG. 4B.

As is clear from the comparison between FIG. 6A and FIG. 6B, the MTF performance related to the image light emitted from the center on the scanned surface element 203 (long dashed line) is hardly changed whether the magnifying concave mirror 301 is rotated or not relative to the scanned surface element 203. This effect is exerted because the magnifying concave mirror 301 has a non-rotationally symmetrical shape and the reflection surface is formed by a free curved surface. As described above, with the HUD 1000 of the embodiment, the MTF performance is not deteriorated even when the magnifying concave mirror 301 is disposed such a manner that it is rotated relative to the scanned surface element 203.

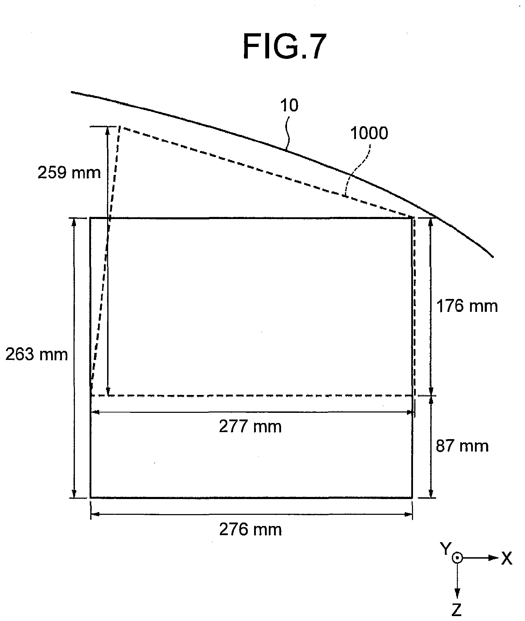

The following will describe an example in which the HUD 1000 including the above-described magnifying concave mirror 301 is provided in an automobile with a right-side steering wheel, with reference to FIG. 7. In FIG. 7, a solid line indicates an example of a conventional head-up display mounted state. A dashed line indicates an example of an HUD 1000 mounted state.

As illustrated in FIG. 7, in the HUD 1000, the magnifying concave mirror 301 is disposed along a curved surface of the front windshield 10 that is the combiner 302. Therefore, even when the HUD 1000 is disposed on a further forward position in the automobile than the conventional manner, it can be disposed without interfering with the front windshield 10.

Moreover, as illustrated in FIG. 7, the length of the HUD 1000 in the lateral direction (X direction) is nearly equal to that of the conventional head-up display, while the length of a shortest part in a front-rear direction (Z-axis direction) of the automobile is reduced by approximately 87 mm. This effect is exerted because the magnifying concave mirror 301 is disposed such a manner that it is rotated on the X-Z plane. Therefore, in the HUD 1000, the shortest part of the automobile in the front-rear direction is markedly downsized.

As described above, even when the magnifying concave mirror 301 is rotated relative to the scanned surface element 203, the optical performance (distortion characteristics and MTF performance) is not markedly deteriorated. This is because the distortion generated on the enlarged virtual image 12 is corrected by using the magnifying concave mirror 301 having a non-rotationally symmetrical shape. In this manner, with the HUD 1000 of the example, it is possible to downsize the apparatus and to provide an image display apparatus having the same optical performance as that of the conventional head-up display.

As described above, in the HUD 1000 of the embodiment, the normal line on the reflection surface of the magnifying concave mirror 301 that is a reflective mirror is inclined with respect to the normal line on the image formation surface of the scanned surface element 203 that is an image forming unit. That is, the magnifying concave mirror 301 is disposed in such a manner that the magnifying concave mirror 301 is rotated relative to the scanned surface element 203. With such arrangement of the magnifying concave mirror 301, it is possible to provide a small-sized image display apparatus having simple configuration at a low-cost.

Moreover, in the HUD 1000 of the embodiment, the magnifying concave mirror 301 is disposed in such a manner that it is rotated relative to the scanned surface element 203. That is, a distance between an end in the longitudinal direction of the magnifying concave mirror 301 and an end in the longitudinal direction of the scanned surface element 203 facing the end of the magnifying concave mirror 301 is different from a distance between the other end of the magnifying concave mirror 301 and the other end of the scanned surface element 203. With such arrangement of the magnifying concave mirror 301, it is possible to provide a small-sized image display apparatus having simple configuration at a low-cost.

In the HUD 1000 of the embodiment, the magnifying concave mirror 301 is rotated in an inclination direction of the front windshield 10. That is, the rotation direction of the magnifying concave mirror 301 is the same as the inclination direction of the front windshield 10. In this manner, it is possible to downsize the image display apparatus in accordance with various kinds of automobiles.

In the HUD 1000 of the embodiment, the magnifying concave mirror 301 has a non-rotationally symmetrical concave shape. Thus, it is possible to correct distortion or resolution performance of the enlarged virtual image 12, allowing a user to visually recognize the enlarged virtual image 12 with preferable image quality.

In the HUD 1000 of the embodiment, a distance "S" between the scanned surface element 203 and the magnifying concave mirror 301 satisfies the following condition: S < WS'/W', where "W" is a length in the longitudinal direction (lateral direction) of the scanned surface element 203 that is an image forming unit, "W'" is a length in the lateral direction (longitudinal direction) of the enlarged virtual image 12 obtained by the HUD 1000, and "S'" is a distance between the front windshield 10 that is the combiner 302 and the enlarged virtual image 12. Thus, it is possible to visually recognize a virtual image with preferable image quality.

In the HUD 1000 of the embodiment, the light source is a laser light source or an LED light source. Thus, it is possible to provide a small-sized image display apparatus having a long life and preferable color reproducibility.

In the HUD 1000 of the embodiment, the intermediate image is formed by the scanning optical system 200 including the scanned surface element 203. Thus, it is possible to provide an image display apparatus that displays the high-contrast enlarged virtual image 12 without disturbing a real field of view.

In the HUD 1000 of the embodiment, the scanning optical system 200 forming the intermediate image includes a DMD that is the two-dimensional deflection element 201. Thus, it is possible to provide an image display device that displays the enlarged virtual image 12 with high resolution.

In the HUD 1000 of the embodiment, it is possible to provide an image display apparatus that enables a driver to recognize an alarm and information by small movement of the visual line in a mobile body such as an automobile and an aircraft.

According to the embodiments of the present invention, it is possible to sufficiently correct distortion of a virtual image and downsize the apparatus.

Although the invention has been described with respect to specific embodiments for a complete and clear disclosure, the invention is defined by the appended claims.

**Claims**

1. An image display apparatus (1000), comprising:

   an image forming element (201) that forms an intermediate image on an image formation surface of a surface element (203); and
   a virtual image optical system (300) that forms a virtual image based on the intermediate image, wherein
   the image display apparatus projects the virtual image on a front windshield (302) of a mobile body to allow a user to visually recognize the virtual image,
   the virtual image optical system (300) includes a magnifying concave mirror (301) that enlarges and projects the intermediate image toward the front windshield (302),
   when a right-left direction of a field of view of the user is defined as an X-axis direction, a vertical direction of the field of view of the user is defined a Y-axis direction, and a direction orthogonal to both the X-axis direction and the Y-axis direction is defined as a Z-axis direction, ends of the magnifying concave mirror (301) and ends of the surface element (203) face each other in a X-Z plane, and
   the magnifying concave mirror (301) is disposed to be inclined relative to the X-axis direction such that a length between one end of the magnifying concave mirror in the X-axis direction and one end of the surface element (203) in the X-axis direction is longer than a length between the other end of the magnifying concave mirror (301) in the X-axis direction and the other end of the surface element (203) in the X-axis direction in the X-Z plane,
   **characterized in that**
   the front windshield (302) is curved in the X-Z plane, and
   an inclination direction of the magnifying concave mirror (301) is the same as an inclination direction of the front windshield (302), and the magnifying concave mirror (301) is disposed along a curved surface of the front windshield (302).

2. The image display apparatus (1000) according to claim 1, wherein the magnifying concave mirror (301) is disposed in such a manner that the magnifying concave mirror (301) is rotated relative to the image forming element (201) about a line as an axis passing through a center of the image forming element (201) in the X-axis direction.

3. The image display apparatus (1000) according to claims 1 or 2, wherein the magnifying concave mirror (301) has a non-rotationally symmetrical concave shape.

4. The image display apparatus (1000) according to any one of claims 1 to 3, wherein
   a distance S between the surface element (203) and the magnifying concave mirror (301) satisfies a following condition:

   (Condition)

   $$S < WS'/W'$$

   where W is a length in the X-axis direction of the surface element (203),
   W' is a length in the X-axis direction of the virtual image, and
   S' is a distance between the front windshield (302) and the virtual image.

5. The image display apparatus (1000) according to any one of claims 1 to 4, comprising:

a light source device (100), wherein the intermediate image is formed with light emitted from the light source device (100).

6. The image display apparatus (1000) according to claim 5, wherein the light source device (100) is a laser or an LED.

7. The image display apparatus (1000) according to any one of claims 1 to 6, comprising:
a scanning optical system (200) including the image forming element (201) that performs scanning with light and forms the intermediate image, wherein the surface element (203) is a scanned surface element (203).

8. The image forming apparatus according to claim 7, wherein the image forming element (201) is included in the scanning optical system (200) that performs, with an optical scanning unit, scanning in a main-scanning direction and a sub-scanning direction with light emitted from a light source.

**Patentansprüche**

1. Bildanzeigeeinrichtung (1000), umfassend:

ein Bildausbildungselement (201), das ein Zwischenbild auf einer Bilderzeugungsoberfläche eines Oberflächenelements (203) ausbildet; und
ein optisches System (300) für ein virtuelles Bild, das ein virtuelles Bild auf Grundlage des Zwischenbildes ausbildet, wobei
die Bildanzeigeeinrichtung das virtuelle Bild auf eine vordere Windschutzscheibe (302) eines mobilen Körpers projiziert, um es einem Benutzer zu ermöglichen, das virtuelle Bild visuell zu erkennen,
das optische System (300) für ein virtuelles Bild einen vergrößernden konkaven Spiegel (301) beinhaltet, der das Zwischenbild vergrößert und in Richtung der vorderen Windschutzscheibe (302) projiziert,
wenn eine Rechts-Links-Richtung eines Sichtfelds des Benutzers als eine X-Achsen-Richtung definiert ist, eine vertikale Richtung des Sichtfelds des Benutzers als eine Y-Achsen-Richtung definiert ist und eine Richtung orthogonal zu sowohl der X-Achsen-Richtung als auch der Y-Achsen-Richtung als eine Z-Achsen-Richtung definiert ist, Enden des vergrößernden konkaven Spiegels (301) und Enden des Oberflächenelements (203) einander in einer X-Z-Ebene zugewandt sind, und
der vergrößernde konkave Spiegel (301) angeordnet ist, um relativ zu der X-Achsenrichtung geneigt zu sein, sodass eine Länge zwischen einem Ende des vergrößernden konkaven Spiegels in der X-Achsenrichtung und einem Ende des Oberflächenelements (203) in der X-Achsenrichtung länger ist als eine Länge zwischen dem anderen Ende des vergrößernden konkaven Spiegels (301) in der X-Achsenrichtung und dem anderen Ende des Oberflächenelements (203) in der X-Achsenrichtung in der X-Z Ebene,
**dadurch gekennzeichnet, dass**
die vordere Windschutzscheibe (302) in der X-Z-Ebene gekrümmt ist, und
eine Neigungsrichtung des vergrößernden konkaven Spiegels (301) die gleiche ist wie eine Neigungsrichtung der vorderen Windschutzscheibe (302), und der vergrößernde konkave Spiegel (301) entlang einer gekrümmten Oberfläche der vorderen Windschutzscheibe (302) angeordnet ist.

2. Bildanzeigeeinrichtung (1000) nach Anspruch 1, wobei der vergrößernde konkave Spiegel (301) auf eine solche Weise angeordnet ist, dass der vergrößernde konkave Spiegel (301) relativ zu dem Bildausbildungselement (201) um eine Linie als eine Achse gedreht ist, die durch einen Mittelpunkt des Bildausbildungselements (201) in der X-Achsenrichtung passiert.

3. Bildanzeigeeinrichtung (1000) nach Ansprüchen 1 oder 2, wobei der vergrößernde konkave Spiegel (301) eine nicht-drehend symmetrische konkave Form aufweist.

4. Bildanzeigeeinrichtung (1000) nach einem der Ansprüche 1 bis 3, wobei
ein Abstand S zwischen dem Oberflächenelement (203) und dem vergrößernden konkaven Spiegel (301) eine folgende Bedingung erfüllt:

$$S < WS'/W'$$

wobei W eine Länge in der X-Achsenrichtung des Oberflächenelements (203) ist,

W' eine Länge in der X-Achsenrichtung des virtuellen Bilds ist, und
S' ein Abstand zwischen der vorderen Windschutzscheibe (302) und dem virtuellen Bild ist.

**5.** Bildanzeigeeinrichtung (1000) nach einem der Ansprüche 1 bis 4, umfassend:
eine Lichtquellenvorrichtung (100), wobei das Zwischenbild mit Licht ausgebildet wird, das von der Lichtquellenvorrichtung (100) emittiert wird.

**6.** Bildanzeigeeinrichtung (1000) nach Anspruch 5, wobei die Lichtquellenvorrichtung (100) ein Laser oder eine LED ist.

**7.** Bildanzeigeeinrichtung (1000) nach einem der Ansprüche 1 bis 6, umfassend:
ein abtastendes optisches System (200), das das Bildausbildungselement (201) beinhaltet, das das Abtasten mit Licht durchführt und das Zwischenbild ausbildet, wobei das Oberflächenelement (203) ein abgetastetes Oberflächenelement (203) ist.

**8.** Bildanzeigeeinrichtung nach Anspruch 7, wobei das Bildausbildungselement (201) in dem abtastenden optischen System (200) beinhaltet ist, das mit einer optischen Abtasteinheit das Abtasten in einer Hauptabtastrichtung und einer Teilabtastrichtung mit Licht durchführt, das von einer Lichtquelle emittiert wird.

## Revendications

**1.** Appareil d'affichage d'image (1000), comprenant :

un élément de formation d'image (201) qui forme une image intermédiaire sur une surface de formation d'image d'un élément de surface (203) ; et
un système optique d'image virtuelle (300) qui forme une image virtuelle sur la base de l'image intermédiaire, dans lequel
l'appareil d'affichage d'image projette l'image virtuelle sur un pare-brise avant (302) d'un corps mobile pour permettre à un utilisateur de reconnaître visuellement l'image virtuelle,
le système optique d'image virtuelle (300) comporte un miroir concave grossissant (301) qui agrandit et projette l'image intermédiaire vers le pare-brise avant (302),
lorsqu'une direction droite-gauche d'un champ de vision de l'utilisateur est définie en tant que direction d'axe X, une direction verticale du champ de vision de l'utilisateur est définie en tant que direction d'axe Y, et une direction orthogonale à la fois à la direction d'axe X et à la direction d'axe Y est définie en tant que direction d'axe Z, des extrémités du miroir concave grossissant (301) et des extrémités de l'élément de surface (203) se font mutuellement face dans un plan X-Z, et
le miroir concave grossissant (301) est disposé pour être incliné par rapport à la direction d'axe X de sorte qu'une longueur entre une extrémité du miroir concave grossissant dans la direction d'axe X et une extrémité de l'élément de surface (203) dans la direction d'axe X soit plus longue qu'une longueur entre l'autre extrémité du miroir concave grossissant (301) dans la direction d'axe X et l'autre extrémité de l'élément de surface (203) dans la direction d'axe X dans le plan X-Z,
**caractérisé en ce que**
le pare-brise avant (302) est courbé dans le plan X-Z, et
une direction d'inclinaison du miroir concave grossissant (301) est la même qu'une direction d'inclinaison du pare-brise avant (302), et le miroir concave grossissant (301) est disposé le long d'une surface courbée du pare-brise avant (302).

**2.** Appareil d'affichage d'image (1000) selon la revendication 1, dans lequel le miroir concave grossissant (301) est disposé de telle sorte que le miroir concave grossissant (301) soit tourné par rapport à l'élément de formation d'image (201) autour d'une ligne en tant qu'axe passant par un centre de l'élément de formation d'image (201) dans la direction d'axe X.

**3.** Appareil d'affichage d'image (1000) selon les revendications 1 ou 2, dans lequel le miroir concave grossissant (301) a une forme concave non symétrique en rotation.

**4.** Appareil d'affichage d'image (1000) selon l'une quelconque des revendications 1 à 3, dans lequel
une distance S entre l'élément de surface (203) et le miroir concave grossissant (301) satisfait une condition suivante :

(Condition)

$$S < WS'/W'$$

où W est une longueur dans la direction d'axe X de l'élément de surface (203),

W' est une longueur dans la direction d'axe X de l'image virtuelle, et

S' est une distance entre le pare-brise avant (302) et l'image virtuelle.

5. Appareil d'affichage d'image (1000) selon l'une quelconque des revendications 1 à 4, comprenant :
un dispositif source de lumière (100), dans lequel l'image intermédiaire est formée avec de la lumière émise depuis le dispositif source de lumière (100).

6. Appareil d'affichage d'image (1000) selon la revendication 5, dans lequel le dispositif source de lumière (100) est un laser ou une DEL.

7. Appareil d'affichage d'image (1000) selon l'une quelconque des revendications 1 à 6, comprenant :
un système optique à balayage (200) comportant l'élément de formation d'image (201) qui réalise un balayage avec de la lumière et forme l'image intermédiaire, dans lequel l'élément de surface (203) est un élément de surface (203) balayé.

8. Appareil de formation d'image selon la revendication 7, dans lequel l'élément de formation d'image (201) est inclus dans le système optique à balayage (200) qui réalise, avec une unité de balayage optique, un balayage dans une direction de balayage principale et une direction de balayage secondaire avec de la lumière émise depuis une source de lumière.

# FIG.1

# FIG.2

# FIG.3

# FIG.4A

# FIG.4B

# FIG.5A

# FIG.5B

# FIG.6A

# FIG.6B

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004101829 A
- US 6750832 B
- DE 102012218360
- FR 2984533
- EP 2945533 A
- US 20090237803 A1